(19) **Europäisches Patentamt**

**European Patent Office**

**Office européen des brevets**

(11) Veröffentlichungsnummer: **0 276 748 B1**

(12) **EUROPÄISCHE PATENTSCHRIFT**

(45) Veröffentlichungstag der Patentschrift: **12.08.92**

(21) Anmeldenummer: **88100789.2**

(22) Anmeldetag: **20.01.88**

(51) Int. Cl.⁵: **B60L 5/04**, B60L 5/18

(54) **Regeleinrichtung vorzugsweise mit Rechnerunterstützung.**

(30) Priorität: **27.01.87 AT 147/87**

(43) Veröffentlichungstag der Anmeldung:
**03.08.88 Patentblatt 88/31**

(45) Bekanntmachung des Hinweises auf die
Patenterteilung:
**12.08.92 Patentblatt 92/33**

(84) Benannte Vertragsstaaten:
**AT BE CH DE ES FR GB GR IT LI LU NL SE**

(56) Entgegenhaltungen:
**DE-A- 2 432 306**
**DE-A- 2 522 876**

**ELEKTRISCHE BAHNEN, Band 49, Nr. 7, Juli
1978, Seiten 168-175, DE; H. ZÖLLER:
"Entwicklung der Stromabnehmer der Triebfahrzeuge der Deutschen Bundesbahn"**

**Idem**

(73) Patentinhaber: **Siemens Aktiengesellschaft
Österreich
Siemensstrasse 88 - 92
A-1210 Wien(AT)**

(84) Benannte Vertragsstaaten:
**AT**

(73) Patentinhaber: **SIEMENS AKTIENGESELL-
SCHAFT
Wittelsbacherplatz 2
W-8000 München 2(DE)**

(84) Benannte Vertragsstaaten:
**BE CH DE ES FR GB GR IT LI LU NL SE**

(72) Erfinder: **Müller, Georg, Dipl.-Ing.
Strohberggasse 25
A-1120 Wien(AT)**

## Beschreibung

Die Erfindung betrifft die Anwendung einer rechnerunterstützten Regeleinrichtung.

Die Kontaktkraft von Stromabnehmern zwischen Fahrleitung und Schleifleiste unterliegt verschiedenen Störeinflüssen, insbesondere aerodynamsichen Kräften und Schwingungskräften. Bisher wurden die sich daraus ergebenden Störungen entweder mit aerodynamischen Steuerhilfen, die eine äußerst sorgfältige und aufwendige Anpassung an die jeweilige Einbausituation erfordern, oder über die Federeigenschaften des Stromabnehmers minimiert. Es sind Einrichtungen denkbar, bei welchen der von der Schleifleiste auf die Fahrleistung ausgeübte Druck während der Fahrt dauernd gemessen und das Ergebnis dieser Messung dazu verwendet wird, um über Servoeinrichtungen auf den Hubmechanismus der Stützvorrichtung des Stromabnehmers einzuwirken.

Aus der Offenlegungsschrift DE-OS 25 22 876 ist eine Regelung der Fahrdraht-Anpreßkraft von Stromabnehmern bekannt, bei welcher Istwerte der Anpreßkraft in höherfrequente und niederfrequente Werte aufgespalten werden, sodaß höherfrequente und niederfrequente Änderungen gemeinsam ausgeregelt werden mit einer einzelnen oder gemeinsamen Auslösung von zwei verschiedenen Stellfunktionen. Falls beispielsweise der Istwert einen oberen oder unteren Schwellwert überschreitet, soll die zweite Stellfunktion zugeschaltet werden. Ein Sollwert der Anpreßkraft wird in Abhängigkeit von der Fahrgeschwindigkeit eingestellt und zwar leicht ansteigend bei einer höheren Fahrgeschwindigkeit.

Der Erfindung liegt die Aufgabe zugrunde, daß eine Regeleinrichtung anzugeben ist zur Konstanthaltung zwischen einer Schleifleiste und einem Fahrdraht erforderlichen Kontaktkraft. Es soll ein Regelverhalten laufend optimierbar sein.

Diese Aufgabe ist gelöst bei einer Regeleinrichtung zur Konstanthaltung einer zwischen einer Schleifleiste und einem Fahrdraht erforderlichen Kontaktkraft, bei welcher für eine Beeinflussung einer Feder-, Dämpfer und Massencharakteristik von einem Stromabnehmer-Schwingungssystem durch einen Rechner für eine Sollwertvorgabe Einflüsse berücksichtigt sind, welche bedingt sind durch den Fahrbetrieb (Fahrgeschwindigkeit), dadurch gekennzeichnet, daß für die Sollwertvorgabe außerdem Einflüsse berücksichtigt sind, die durch die Stromabnehmer selbst (Bauart, Anzahl, gegenseitiger Abstand bei Mehrfachtraktion) und durch die Iriebfahrzeuge (aerodynamischer und fahrdynamischer Einfluß, Stellung des Triebfahrzeuges im Zugverband) bedingt sind.

Ausführbar ist eine bevorzugte Regeleinrichtung, bei welcher eine Beeinflussung der Sollwertvorgabe über streckenfeste Einrichtungen vorgesehen ist.

Erfindungsgemäß wird zur Lösung dieser Aufgabe eine rechnergestützte Regeleinrichtung benützt, die zur Beeinflussung der Feder-, Dämpfer- und Massencharakteristik des dem Hubapparat eines Stromabnehmers nachgeschalteten schwingungsfähigen Systems wie auch des Hubapparates selbst verwendet wird. Dabei sind bei der Sollwertvorgabe durch den Rechner Einflüsse berücksichtigt, die durch die Stromabnehmer selbst - Bauart, Anzahl, gegenseitiger Abstand bei Mehrfachtraktion - , durch die Triebfahrzeuge - aerodynamischer und fahrdynamischer Einfluß, Stellung des Triebfahrzeuges im Zugsverband - sowie durch den Fahrbetrieb - Fahrtrichtung, Fahrgeschwindigkeit sowie streckenspezifische Gegebenheiten -, bedingt sind.

Durch eine Beeinflussung über streckenfeste Einrichtungen können streckentypische Parameter vorgegeben werden.

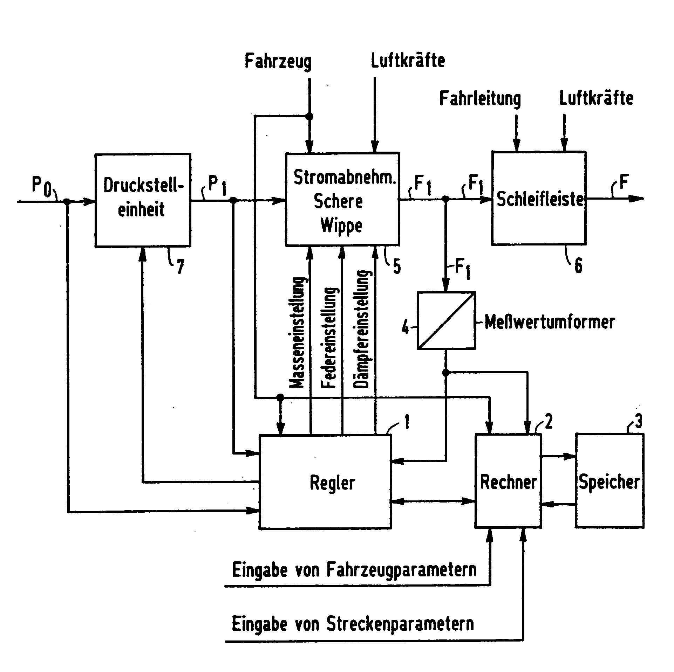

Anhand von Zeichnungen soll nachfolgend die erfindungsgemäße Anwendung der Regeleinrichtung erläutert werden. Das Blockschaltbild Fig. 1 zeigt den Regler 1 mit Rechner 2 und Speicher 3, den Meßwertumformer 4, den Stromabnehmer 5 mit Schere und Wippe, die federnd aufgesetzte Schleifleiste 6 sowie die Drucksteileinheit 7, durch die das Hubmoment an der Basiswelle des Stromabnehmers und damit die statische Kontaktkraft sowie die Federeigenschaft der Hauptschere(n) des Stromabnehmers bestimmt wird. Ebenso zeigt das Blockschaltbild die mechanischen (hydraulischen, pneumatischen) und elektrischen Wirkverbindungen zwischen den Blöcken. Darunter sind der Speisedruck $p_o$ für die Drucksteileinheit, der Arbeitsdruck $p_1$ für den Hubantrieb, die Kontaktkraft F sowie die Kraft $F_1$ zwischen Wippe und Schleifleiste.

Dem Rechner 2 wird eine Reihe von Parametern eingegeben, die den Einfluß der (des) Stromabnehmer(s), nämlich Bauart, Anzahl, gegenseitiger Abstand bei Mehrfachtraktion, den Einfluß der (des) Triebfahrzeuge(s), nämlich aerodynamischer Einfluß z.B. der Stirnform und fahrdynamische Einflüsse, Stellung des Triebfahrzeuges im Zugsverband sowie den Einfluß des Fahrbetriebes, nämlich Fahrtrichtung, Fahrgeschwindigkeit sowie Streckengegebenheiten, simulieren. Es können somit alle aktuellen Daten abgefragt und der Reglersollwert sowie alle übrigen variablen Reglerkenndaten, wie z.B. Grenzwerte, Regelparameter etc. über den Rechner 2 extern vorgegeben werden. Der Rechner 2 erhält Informationen, darunter auch den Istwert, die er permanent nach seinen Programmanweisungen verarbeitet. Die Ergebnisse dieser Informationsverarbeitung werden dazu benutzt, den Hubantrieb über die Drucksteileinheit 7 sowie die Systemparameter des Schwingungssystems Stromabnehmer (z.B. Federeinstellung, Dämpfereinstellung, Masseneinstellung) zielführend zu beeinflussen.

Mit Hilfe des Meßwertspeichers 3 und entsprechender Software kann ein selbstlernendes System aufgebaut werden, das seine Regelkennlinie laufend optimiert und damit eine dauernde Optimierung des Regelverhaltens bewirkt. Mit Hilfe eines derartigen selbstlernenden Systems besteht die Möglichkeit, einerseits die je nach Zugform und Strecke unterschiedlichen Verhältnisse und andererseits alterungsbedingte Veränderungen der Stromabnehmer- und Fahrzeugparameter auszugleichen.

## Patentansprüche

1. Regeleinrichtung zur Konstanthaltung einer zwischen einer Schleifleiste (6) und einem Fahrdraht erforderlichen Kontaktkraft, bei welcher für eine Beeinflussung einer Feder-, Dämpfer- und Massencharakteristik von einem Stromabnehmer-Schwingungssystem durch einen Rechner (2) für eine Sollwertvorgabe Einflüsse berücksichtigt sind, welche bedingt sind durch den Fahrbetrieb (Fahrgeschwindigkeit), **dadurch gekennzeichnet,** daß für die Sollwertvorgabe außerdem Einflüsse berücksichtigt sind, die durch die Stromabnehmer (5) selbst (Bauart, Anzahl, gegenseitiger Abstand bei Mehrfachtraktion) und durch die Triebfahrzeuge (aerodynamischer und fahrdynamischer Einfluß, Stellung des Triebfahrzeuges im Zugverband) bedingt sind.

2. Regeleinrichtung nach Anspruch 1, bei welcher eine Beeinflussung der Sollwertvorgabe über streckenfeste Einrichtungen vorgesehen ist.

## Claims

1. Control device for keeping constant a contact force required between a collector rail (6) and a contact wire, in which, for the purpose of influencing a spring, damper and mass characteristic of a current collector oscillation system by a computer (2), influences are taken into account for the stipulation of a set value, which influences are conditioned by the travelling mode (travelling speed), characterised in that, for the stipulation of a set value influences are additionally taken into account which are conditioned by the current collectors (5) themselves (type, number, mutual spacing in the case of multiple traction) and by the power units (aerodynamic and vehicle-movement dynamic influence, position of the power unit in the train configuration).

2. Control device according to Claim 1, in which influencing of the set value stipulation is provided by means of devices fixed to routes.

## Revendications

1. Dispositif de régulation destiné à maintenir constante une force de contact qui est nécessaire entre une baguette coulissante (6) et un fil de contact et pour laquelle, dans le cas d'une influence d'une caractéristique de ressort, d'amortisseur et de masse d'un système d'oscillations d'un pantographe par un calculateur (2), des influences, qui sont dues au déplacement (vitesse de déplacement), sont prises en compte pour une prédétermination d'une valeur de consigne, caractérisé par le fait que pour la prédétermination de la valeur de consigne on tient compte, en outre, d'influences qui sont dues au pantographe (5) lui-même (type, nombre, distance réciproque dans le cas d'une traction multiple) et aux véhicules moteurs (influence aérodynamique et influence dynamique de déplacement, position du véhicule moteur dans le train).

2. Dispositif de régulation suivant la revendication 1, dans lequel une influence de la prédétermination de la valeur de consigne est prévue par l'intermédiaire de dispositifs fixés à la voie.

Fahrzeug    Luftkräfte    Fahrleitung    Luftkräfte

$P_0$ — Druckstell-einheit — $P_1$ — Stromabnehm. Schere Wippe — $F_1$ — $F_1$ — Schleifleiste — $F$

7    5    6

$F_1$

Masseneinstellung    Federeinstellung    Dämpfereinstellung

4 — Meßwertumformer

1    2    3

Regler    Rechner    Speicher

Eingabe von Fahrzeugparametern

Eingabe von Streckenparametern